# EUROPEAN PATENT APPLICATION

(11) **EP 4 535 249 A1**
(43) Date of publication of application: **09.04.2025**
(21) Application number: 24204768.6
(22) Date of filing: 04.10.2024
(51) Int. Cl.: G06N 20/00

(54) **DETERMINING SIMILARITY SAMPLES USING A MACHINE LEARNING OPERATION WITH CLUSTERING**

(30) Priority: 06.10.2023 US 202318482258
(71) Applicant: Cylance Inc., Irving, TX 75039 (US)
(72) Inventor: FIENBERG, Aaron Mark Tresch, Waterloo, N2K 0A7 (CA); COLLADO UMANA, Julian, Waterloo, N2K 0A7 (CA)
(74) Representative: Novagraaf International SA

(57) **Abstract**

Systems, methods, and software can be used to determine similarity samples. In some aspects, a method includes: obtaining a first feature vector of a sample; processing the first feature vector through a plurality of dimensionality reduction processes, wherein each of the plurality of dimensionality reduction processes generates a respective second feature vector, each of the second feature vectors has a smaller dimension than a dimension of the first feature vector; for each of the second feature vectors, determining an intermediate set of similarity samples; generating a plurality of clusters based on the intermediate sets of similarity samples; and generating an output set of similarity samples based on the plurality of clusters.

## Description

### CROSS-REFERENCE TO RELATED APPLICATIONS

This application claims the benefit of U.S. Application Serial No. 18/482,258, filed October 6, 2023. The disclosure of the prior application is considered part of (and is incorporated by reference in) the disclosure of this application.

### TECHNICAL FIELD

The present disclosure relates to determining similarity samples by using a machine learning operation with a clustering operation.

### BACKGROUND

Similarity analysis refers to the process of searching for samples that are similar to a given input sample. In one example, similarity analysis can be used to determine whether a software code is potentially malicious by comparing the software code with a set of samples. The set of samples can include software code with known security risks. In another example, similarity analysis can be used in an imaging process to select images that are close to an input image. In some cases, machine learning operations such as k-Nearest Neighbor (k-NN) algorithm can be used to perform similarity analysis.

### DESCRIPTION OF DRAWINGS

FIG. 1 is a schematic diagram showing an example system that determines similarity samples, according to an implementation.
FIG. 2 is a flowchart showing an example operation for determining similarity samples, according to an implementation.
FIG. 3 is a schematic diagram illustrating an example method that determines similarity samples, according to an implementation.
FIG. 4 illustrates a high-level architecture block diagram of a computer according to an implementation.

Like reference numbers and designations in the various drawings indicate like elements.

### DETAILED DESCRIPTION

In some implementations, the similarity analysis can be performed by converting the input sample to a feature vector and searching for neighbor vectors in prior-stored training samples to determine a set of similarity samples. These training samples can also be referred to as base samples or base training samples. However, such an analysis can become highly expensive or computationally intractable as the dimensions of the feature vector increase.

In some cases, dimensionality reduction techniques can be used to reduce the number of features and thus reduce the computational complexity of the operation. Examples of the dimensionality reduction techniques include deterministic techniques and stochastic techniques. In one example of stochastic techniques, a random projection matrix can be used to reduce the dimension of the feature vectors. However, such techniques often lead to errors in prediction outcomes due to loss of information in the dimensionality reduction. In particular, when the degree of dimensionality is reduced significantly, the prediction error can also be significant. For example, in a similarity analysis performed using a random projection matrix with significant dimensionality reduction, e.g., by a factor of 100 or more, the prediction accuracy is reduced to around 17%.

Furthermore, in some cases, the base samples may include samples that are close to each other. For example, the base samples may include several versions of the same code that are compiled at different dates, or several images of the same object with different shades. When selecting K similarity samples based on the distances between the base samples and the input sample, if one of these close samples is included, other close samples (different versions of the same code or same image) are likely to be included as well because the distances between these samples may be very small. As a result, the selected K similarity samples may include a much smaller diversity number of samples having different content (different codes or images). This would reduce the diversity and the effectiveness of the similarity analysis. In some cases, clustering operations may be performed to reduce the original base samples, but because these base samples have large dimensions, clustering operations can become highly expensive or computationally intractable in the base sample space as well.

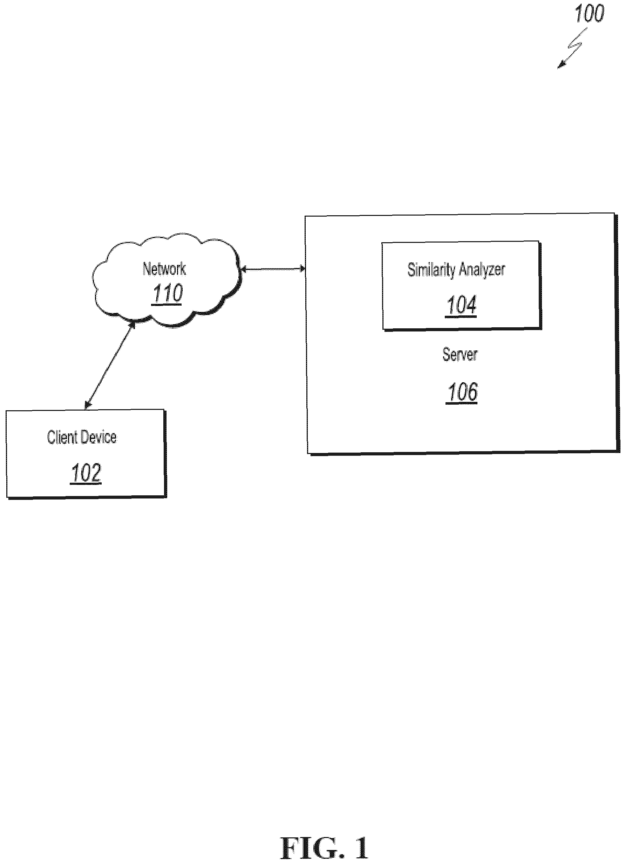

In some operations, the similarity analysis can be performed by using multiple dimensionality reduction processes with a clustering operation. Each of the multiple dimensionality reduction processes is conducted in parallel and produce a respective intermediate set of similarity samples. A clustering operation can be performed on these intermediate sets of similarity samples to generate an output set. This approach maintains the benefit of complexity reduction discussed before while improving the prediction accuracy. This approach further reduces the amount of similarity samples that have same content and increase the diversity of the samples in the output set. In some cases, the accuracy is improved by multiple folds. FIGS. 1-4 and associated descriptions provide additional details of these implementations.

FIG. 1 is a schematic diagram showing an example system 100 that determines similarity samples, according to an implementation. At a high level, the example system 100 includes a server 106 that is communicatively coupled with a client device 102 over a network 1 10.

The client device 102 represents an electronic device that provides the sample to be analyzed. In some cases, the client device 102 can send the sample to the server 106 for similarity analysis. Alternatively or additionally, the client device 102 can generate a feature vector of the sample and send the feature vector to the server 106 for similarity analysis. In some cases, the server 106 can send the output of the similarity analysis to the client device 102.

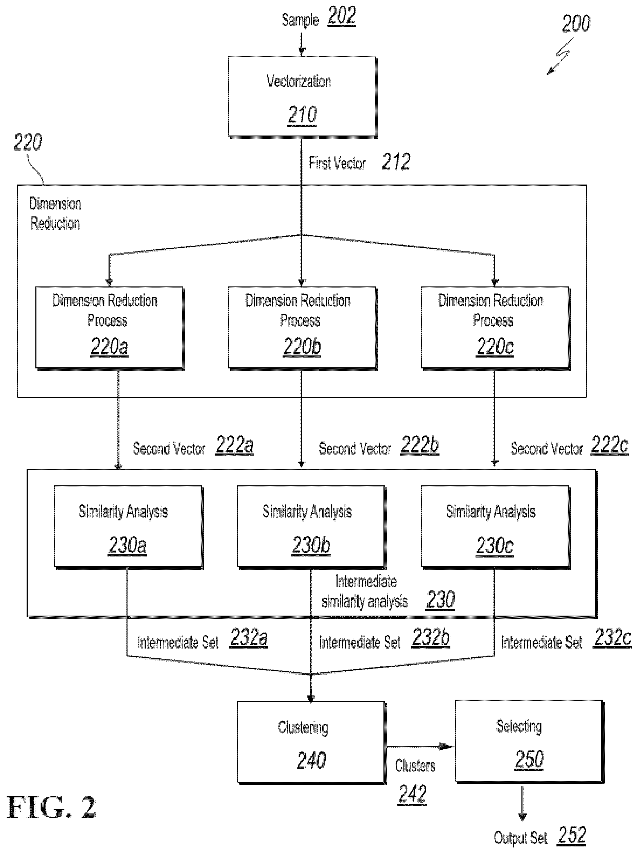

The server 106 represents an application, a set of applications, software, software modules, hardware, or any combination thereof, that determines similarity samples. The server 106 can be an application server, a service provider, or any other network entity. The server 106 can be implemented using one or more computers, computer servers, or a cloud-computing platform. The server 106 can be used to train machine learning models that are used in the similarity sample determination operation. The server 106 includes a similarity analyzer 104. The similarity analyzer 104 represents an application, a set of applications, software, software modules, hardware, or any combination thereof, that determines similarity samples. In some implementations, the similarity analyzer 104 can receive an input sample, generate a feature vector of the input sample, process the feature vector through multiple dimensionality reduction processes, determine multiple intermediate sets of similarity samples, generate a plurality of clusters based on the intermediate sets of similarity samples, and generate an output set of similarity samples based on the plurality of clusters. FIGS. 2-4 and associated descriptions provide additional details of these implementations.

The similarity analysis can be performed for different purposes. For example, the similarity analysis can be performed for software code analysis. In this example, the input sample can be software code. The software code can be source code or binary code. In a software development process, source code can be created by programmers using a text editor or a visual programming tool prior to compilation. The source code can be developed with a human-readable programming language and may be saved in a text file. The source code can be transformed by an assembler or a compiler into binary software code that can be executed by the computer. In some cases, the source code can be generated by automated tools, e.g., artificial intelligence powered by large language models.

The binary software code can include a stream of bytes that are generated by compiling the source code. Thus, the binary software code may not be in a human-readable format and may not be easily parsed or analyzed by a human.

The binary software code can be in a configuration of object code, executable code, or bytecode. An object code is the product of compiler output of a sequence of statements or instructions in a computer language. The source code can be logically divided into multiple source files. Each source file is compiled independently into a corresponding object file that include an object code. The object codes in the object files are binary machine codes, but they may not be ready to be executed. The object files can include incomplete references to subroutines outside themselves and placeholder addresses. During the linking process, these object files can be linked together to form one executable file that includes executable code that can be executed on a computing device. During the linking process, the linker can read the object files, resolve references between them, perform the final code layout in the memory that determines the addresses for the blocks of code and data, fix up the placeholder addresses with real addresses, and write out the executable file that contains the executable code.

A bytecode, also referred to as portable code or p-code, is a form of instruction set designed for efficient execution by a software interpreter. Bytecodes include compact numeric codes, constants, and references (normally numeric addresses) that encode the result of compiler parsing and performing semantic analysis of things like type, scope, and nesting depths of program objects. The bytecode includes instruction sets that have one-byte opcodes followed by optional parameters. Intermediate representations such as the bytecode may be output by programming language implementations to ease interpretation or may be used to reduce hardware and operating system dependence by allowing the same code to run cross-platform, on different devices. The bytecode may often be either directly executed on a virtual machine (a p-code machine i.e., interpreter), or it may be further compiled into machine code for better performance. In some cases, binary software code that is coded using platform-independent languages such as JAVA can be stored in the bytecode format.

In this case, the client device 102 can be a device that receives or generates the software code for analysis. The server 106 can be a software service platform that performs the similarity analysis on the software code to compare it with a set of pre-stored software code samples.

Applications for software similarity analysis include but are not limited to malicious software (malware) classification, malware family identification, identifying different versions of the same piece of software, identifying software authors, identifying malware as being part of a specific attack campaign, identifying software samples for whitelisting or blacklisting, and grouping files based on software complexity. The similarity analysis can be performed for other purposes, e.g., image analysis, video or audio recognition, natural language processing, etc.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), Code Division Multiple Access 2000 (CDMA2000), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

A RAN is part of a wireless telecommunication system which implements a radio access technology, such as UMTS, CDMA2000, 3GPP LTE, 3GPP LTE-A, and 5G. In many applications, a RAN includes at least one base station. A base station may be a radio base station that may control all or at least some radio-related functions in a fixed part of the system. The base station may provide radio interface within their coverage area or a cell for a mobile device to communicate. The base station may be distributed throughout the cellular network to provide a wide area of coverage. The base station directly communicates to one or a plurality of mobile devices, other base stations, and one or more core network nodes.

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example operation 200 for generating similarity samples, according to an implementation. The example operation 200 can be implemented by a server, e.g., the server 106 shown in FIG. 1. The example operation 200 shown in FIG. 2 can be implemented using additional, fewer, or different operations, which can be performed in the order shown or in a different order.

At 210, a vectorization process is performed on a sample 202 to generate a first vector 212. The sample 202 can be a software code, e.g., a document file, an executable code, or a script. In some cases, different vectorization procedures can be used for different types of the sample 202. The sample 202 can also be other forms of a data sample to be evaluated in a similarity analysis. The vectorization process coverts the sample 202 into a vector representation. In some cases, the vectorization process can be performed using feature extraction algorithms. For example, the vector can be generated based on the features of the sample 202. If the sample 202 is software code, the features of the software code can be contents or characteristics of the software code. Examples of the features include file size, file format, file type (e.g., whether the software code is binary or source code), file content (part or all of the software code), associated operating system or programming environment, the number of particular strings included in the code, the structure of the code (e.g., the order of a set of instructions), signature, checksum, and etc. The information of the software code can be obtained from metadata associated with the code, from a preprocess operation that scans the software code and extracts the feature information automatically from the code, or both. If the sample 202 is an image, the features of the image can include image size, resolution, color profile, and other information.

In some operations, each feature can be converted to a numerical value, in format of integer numbers or floating point numbers. The numerical values can be concatenated into one or more feature vectors. Alternatively or additionally, the numerical values can be combined or transformed to generate the one or more feature vectors. Examples of the transformation or combination techniques include multiplication, addition, passing through a non-linear transformation function (e.g., Fourier, Rectifying, or etc.).

In some cases, the first vector 212 has a large dimension, so as to preserve the features in the sample 202. In some cases, the dimension can be on the order of millions or even billions.

At 220, a plurality of dimension reduction processes is performed on the first vector 212. Each of the plurality of dimension reduction processes, e.g., 220a, 220b, and 220c, generates a respective second vector, i.e., 222a, 222b, and 222c as illustrated in FIG. 2. While FIG. 2 shows only 3 second vectors produced by a three-dimension reduction processes, other number of dimension reduction processes, e.g., 10 or more, can be configured.

In a random projection process, the original M-dimensional input vector is projected to a N-dimensional subspace by using an M × N matrix, referred to as a random matrix P. For example, the output vector can be obtained by multiplying the input vector with P. N is smaller than M. In some cases, N can be smaller than M by several orders of magnitudes, e.g., N can be smaller than M by a factor of 100, 1000, 10000, or more. The random matrix P can be generated using a Gaussian distribution. Following is an example process of generating the random matrix P: the first row is a random unit vector uniformly chosen from S^{M-1}, where S represents the field of the input vector. The second row is a random unit vector from the space orthogonal to the first row, the third row is a random unit vector from the space orthogonal to the first two rows, and the process is repeated until the last row is generated. In some cases, the random projection can be further condensed by quantization, with 1-bit or multi-bits. In some cases, the random projection can also be normalized. In one example, the random matrix P can be generated by the following steps: for each row, randomly selecting a single element to be set to either I or -1. In some cases, a random function can be used to determine whether the selected element is set to 1 or -1. The other elements of the row are set to be 0. This process repeated for each row to generate the matrix P.

In some implementations, multiple random projection matrices (e.g., Pa, Pb, Pc, etc.) can be generated by repeating the process discussed previously. In these cases, different random seed or random function, or both, is used to generate each random projection matrix, and therefore these different random projection matrices are different. Each of the random projection matrices has the same dimension reduction property, i.e., reducing the dimensions from M to N, but the value of each element in the matrices are different. In another example, each of the random projection matrices may have different dimension reduction properties, e.g., the value of N may be different for different matrices.

Therefore, by multiplying the input vector, i.e., the first vector 212, with each of the random projection matrices, different output vectors, i.e., the second vectors 222a, 222b, and 222c, can be generated.

At 230, intermediate similarity analysis is performed. As illustrated, similarity analyses 230a, 230b, and 230c are performed on the respective second vectors, i.e., second vectors 222a, 222b, and 222c, to generate the respective intermediate sets 232a, 232b, and 232c.

In some cases, k-nearest neighbors algorithm (k-NN) can be used to perform the similarity analysis on the second vectors. In an example k-NN algorithm, distance between the input data point and indices of the training samples are calculated. Examples of the distance used for the calculation can be Euclidean distance, Hamming distance, or other metrics, including, e.g., cosine similarity. Then k-nearest neighbors to the input data point are identified. The k-NN algorithm used to perform the similarity analysis can be an exact k-NN algorithm or an approximate k-NN algorithm. In some implementations, a different type of distance can be used for each of the similarity analyses 230a, 230b, and 230c. For example, the similarity analyses 230a can rely on the use of the Manhattan distance, the similarity analyses 230b can rely on the use of the Minkowski distance and the similarity analyses 230c can rely on the use of a cosine similarity metric. This approach can be advantageous when different distance functions can lead to different sets of similarity samples. In other implementations, the same type of distance can be used for each of the similarity analyses 230a, 230b, and 230c.

In this operation, the base training samples in the original dimension space are processed with the same random projection process discussed previously (e.g., multiplying with random projection matrices Pa, Pb, Pc, respectively) to generate different index sets for the corresponding k-NN model of that process. In some cases, these index sets can be generated during the training phase and stored on the server prior to the start of the operation 200. The training phase can be performed by the server or by another device or platforms. For the similarity analysis 230a, the second vector 222a is used as an input data point to the corresponding k-NN model. The distances between the second vector 222a and the indices of the corresponding k-NN model are calculated, and an intermediate set of similarity samples 232a is determined. In some cases, the samples in the intermediate set of similarity samples are the k base training samples whose indices have the shortest distance to the second vector 222a. The same process is repeated for other second vectors and their corresponding k-NN models to generate intermediate sets of similarity samples 232b and 232c. The number k is a threshold number that can be configured by a user, an administrator, or other operation personnel or algorithms.

In some cases, the dimensionality reduction operation discussed previously can be used in combination with other dimensionality reduction techniques. Examples of the other dimensionality reduction techniques include principal component analysis, Lasso regression, an auto encoder, etc. In some cases, different dimensionality reduction techniques can be used for data samples that have different types or formats. For example, one autoencoder model can be trained for executable code and another can be trained for document file. In one example, these other dimensionality reduction techniques can be performed after the step 210 and before the step 220. In this example, these other dimensionality reduction techniques are performed on the first vector 212 to generate a first dimension reduced vector, and the first dimension reduced vector is used as the input to the step 220 to perform random dimension reduction. In another example, these other dimensionality reduction techniques can be performed after the step 220. In this example, these other dimensionality reduction techniques are performed on the second vectors 222a, 222b, and 222c to generate a second dimension reduced vectors, and the second dimension reduced vectors are used as the input to the step 230 to perform intermediate similarity analysis.

At 240, a clustering operation is performed on the intermediate sets of similarity samples 232a, 232b, and 232c to generate a plurality of clusters 242. For the clustering operation, the base samples in the intermediate sets 232a, 232b, and 232c are used. These base samples are in the original dimension space. In some cases, there may be duplicates in the intermediate sets 232a, 232b, and 232c because some base samples may appear in more than one intermediate set. These duplicates are removed and the remaining base samples in the intermediate sets 232a, 232b, and 232c form a candidate set. The clustering operation is performed on the candidate set.

The goal of the clustering operation is to group the base samples that are close to each other in the same cluster. In one example, k-means can be used to perform the clustering operation. In a k-means operation, the candidate set is partitioned into k clusters based on the distance between each base sample and the center of the clusters. In some cases, the operation can be performed by using an iterative technique. An initial set of k clusters are selected. The initial set of k clusters can be selected randomly, or by choosing k samples as the center of each cluster. Examples of the initialization techniques include Forgy, Random Partition, etc. Each base sample in the candidate set is assigned to one of the k clusters based on the distance between the base sample and the center of each cluster. For example, the base sample can be assigned to the cluster whose center has the shortest distance to the base sample. After all the base samples in the candidate set are assigned, the center of each cluster is re-determined based on the distances between the base samples in that cluster. For example, for each base sample in the cluster, the mean distances between the base sample and other base samples in the clusters are calculated, and the base sample with the smallest mean distance is selected as the center of the cluster. After new centers are determined, the assignment step is performed again. Each base sample is assigned to one cluster based on the distances between the base sample and the distances of the new centers. The center determination step and assignment step can continue to repeat multiple times to determine the k clusters, where each cluster includes one or more base samples.

Alternatively or in combination, other clustering techniques can also be used. Examples of the other clustering techniques include k-medians clustering, k-means++ clustering, k-medoids, Gaussian mixture, etc. The number of clusters can be configured by a user, an administrator, or other operation personnel or algorithms.

The distance used in the clustering operation is the distance in the original dimension space. Examples of the distance can be Euclidean distance, Hamming distance, or other metrics, including, e.g., cosine similarity.

At 250, the base samples in the clusters 242 are selected to form the output set 252. In some cases, a preset number of base samples in each cluster is selected. Because each cluster includes base samples that are close to each other, e.g., base samples with very small variation to each other, by selecting base samples from each cluster, a diverse set of base samples can be included in the output set 252.

In one example, the sample closest to the center of each cluster is selected to form the output set 252. In another example, for each cluster, in addition to the center, X number with the shortest distances to the center are selected to form the output set 252. Additionally or alternatively, for each cluster, Y number with the longest distances to the center are selected to form the output set 252. X and Y are presets number configured by a user, an administrator, or other operation personnel or algorithms. X and Y can be 1 or other number. In another example, the sample closest to the center of the cluster is selected to form an initial output set. Then for each cluster, the sample that is furthest away from the selected sample but that is still in the cluster is added to the initial output set. Then the sample that is furthest away from the all the selected sample but still in the cluster is added. This process repeats iteratively until a preset number of samples in the initial output set is reached and the initial output set becomes the output set 252.

Additionally or alternatively, the selection can be performed based on the distance between the input sample 202 and the base samples in each cluster. For each cluster, the distance between the input sample 202 and the base samples in that cluster can be calculated. In one example, the X number of base samples in each cluster with the shortest distances to the input sample 202 are selected to form the output set 252. X is a preset number configured by a user, an administrator, or other operation personnel or algorithms. X can be 1 or other number.

The distance used in the selecting operation is the distance in the original dimension space. Examples of the distance can be Euclidean distance, Hamming distance, or other metrics, including, e.g., cosine similarity.

In some cases, the output set 252 can be outputted at the user interface of the server that performs the analysis. Other information, e.g., the clustering information, the distance information, or a combination can also be provided. Alternatively or additionally, the output set 252 can be sent to a different device for outputting. Other information, e.g., the clustering information, the distance information, or a combination can also be sent to the different device.

In a classification operation, the class of the input data point can be determined based on a majority vote of the class labels of the k nearest neighbors. In a regression operation, the average or weighted average of the target values of the K neighbors can be calculated to determine the target value of the input data point.

In some cases, the classification operation or regression operation of k-NN can be performed after the output set 252 is generated. For example, each base sample in the output set 252 has a classification label, and a classification of the sample 202 can be determined based on a majority vote of these base samples. In one implementation, the operation 200 can be used to determine the security status of the software code. In these cases, the input sample can be the software code, and the classification label can include "safe" or "potentially malicious". Alternatively or additionally, the classification label can further indicate different risks level of the malicious potential. In these cases, the determined classification label can also be outputted or sent to another device for outputting.

In another implementation, the operation 200 can be used for image processing. In these cases, the input sample can be an example image, and the base samples in the output set 242 can be used to search for a target image that is close to the example image. In these cases, the retrieved target image can also be outputted or sent to another device for outputting.

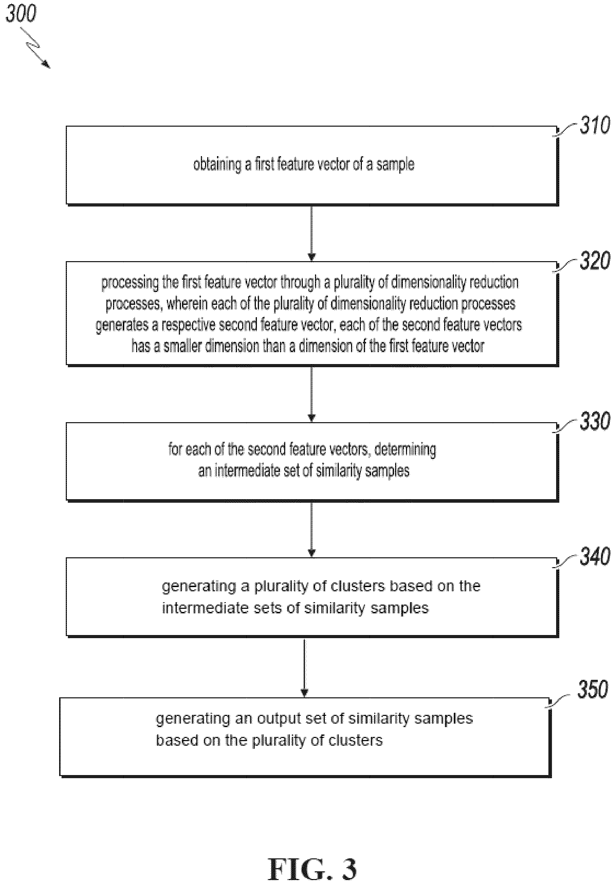

FIG. 3 is a flowchart showing an example method 300 for generating similarity samples, according to an implementation. The example method 300 can be implemented by a server, e.g., the server 106 shown in FIG. 1. The example method 300 shown in FIG. 3 can be implemented using additional, fewer, or different operations, which can be performed in the order shown or in a different order.

At 310, the first feature vector of the sample is obtained. The first feature vector of the sample can be generated using the process described in FIG. 2 and associated processes. In some cases, the first feature vector of the sample is generated by the server that performs the similarity analysis after the server receives the sample. Alternatively or additionally, the first feature vector of the sample is generated by another device and sent to the server 106 for similarity analysis.

At 320, the server processes the first feature vector through a plurality of dimensionality reduction processes. Each of the plurality of dimensionality reduction processes generates a respective second feature vector, each of the second feature vectors has a smaller dimension than a dimension of the first feature vector.

At 330, for each of the second feature vectors, the server determines an intermediate set of similarity samples.

At 340, the server generates a plurality of clusters based on the intermediate sets of similarity samples.

At 350, the server generates an output set of similarity samples based on the plurality of clusters.

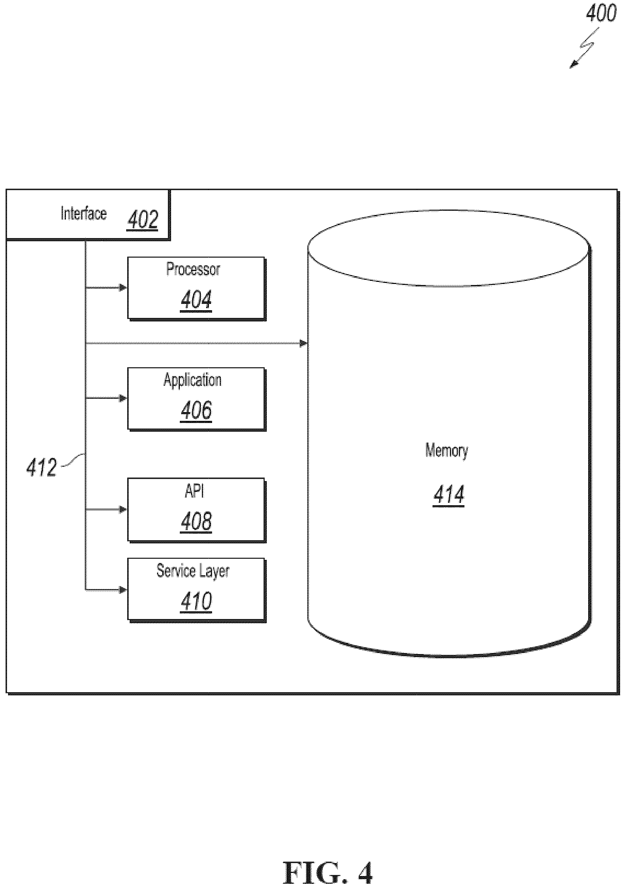

FIG. 4 illustrates a high-level architecture block diagram of a computer 400 according to an implementation. The computer 400 can be implemented as the server 106 and the client device 102 of FIG. 1. The computer 400 can also be used to implement the operations discussed in FIGS. 2-3. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the processing algorithm of the code package establishment can be implemented in an executable computing code, e.g., C/C++ executable codes. In some cases, the computer 400 can include a standalone Linux system that runs batch applications. In some cases, the computer 400 can include mobile or personal computers.

The computer 400 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 400 can serve as a client, network component, a server, a database or other persistency, and/or any other components. In some implementations, one or more components of the computer 400 may be configured to operate within a cloud-computing-based environment.

At a high level, the computer 400 is an electronic computing device operable to receive, transmit, process, store, or manage data. According to some implementations, the computer 400 can also include, or be communicably coupled with, an application server, e-mail server, web server, caching server, streaming data server, business intelligence (BI) server, and/or other server.

The computer 400 can collect data of network events or mobile application usage events over network 110 from a web browser or a client application, e.g., an installed plugin. In addition, data can be collected by the computer 400 from internal users (e.g., from a command console or by another appropriate access method), external or third parties, other automated applications, as well as any other appropriate entities, individuals, systems, or computers.

Each of the components of the computer 400 can communicate using a system bus 412. In some implementations, any and/or all the components of the computer 400, both hardware and/or software, may interface with each other and/or the interface 402 over the system bus 412 using an Application Programming Interface (API) 408 and/or a service layer 410. The API 408 may include specifications for routines, data structures, and object classes. The API 408 may be either computer language-independent or-dependent and refer to a complete interface, a single function, or even a set of APIs. The service layer 410 provides software services to the computer 400. The functionality of the computer 400 may be accessible for all service consumers using this service layer. Software services, such as those provided by the service layer 410, provide reusable, defined business functionalities through a defined interface. For example, the interface may be software written in JAVA, C++, or other suitable languages providing data in Extensible Markup Language (XML) format or another suitable format. While illustrated as an integrated component of the computer 400, alternative implementations may illustrate the API 408 and/or the service layer 410 as stand-alone components in relation to other components of the computer 400. Moreover, any or all parts of the API 408 and/or the service layer 410 may be implemented as child or sub-modules of another software module, enterprise application, or hardware module without departing from the scope of this disclosure.

The computer 400 includes an interface 402. Although illustrated as a single interface 402 in FIG. 4, two or more interfaces 402 may be used according to particular needs, desires, or particular implementations of the computer 400. The interface 402 is used by the computer 400 for communicating with other systems in a distributed environment connected to a network (whether illustrated or not). Generally, the interface 402 comprises logic encoded in software and/or hardware in a suitable combination and operable to communicate with the network. More specifically, the interface 402 may comprise software supporting one or more communication protocols associated with communications such that the network or interface's hardware is operable to communicate physical signals within and outside of the computer 400.

The computer 400 includes at least one processor 404. Although illustrated as a single processor 404 in FIG. 4, two or more processors may be used according to particular needs, desires, or particular implementations of the computer. Generally, the processor 404 executes instructions and manipulates data to perform the operations of the computer 400. Specifically, the processor 404 executes the functionality disclosed in FIGS. 1-4.

The computer 400 also includes a memory 414 that holds data for the computer 400. Although illustrated as a single memory 414 in FIG. 4, two or more memories may be used according to particular needs, desires, or particular implementations of the computer 400. While memory 414 is illustrated as an integral component of the computer 400, in alternative implementations, memory 414 can be external to the computer 400.

The application 406 is an algorithmic software engine providing functionality according to particular needs, desires, or particular implementations of the computer 400, particularly with respect to functionality required for anomaly detection. Although illustrated as a single application 406, the application 406 may be implemented as multiple applications 406 on the computer 400. In addition, although illustrated as integral to the computer 400, in alternative implementations, the application 406 can be external to the computer 400.

There may be any number of computers 400 associated with, or external to, and communicating over a network. Furthermore, this disclosure contemplates that many users may use one computer 400, or that one user may use multiple computers 400.

Described implementations of the subject matter can include one or more features, alone or in combination.

For example, in a first implementation, a method, comprising: obtaining a first feature vector of a sample; processing the first feature vector through a plurality of dimensionality reduction processes, wherein each of the plurality of dimensionality reduction processes generates a respective second feature vector, each of the second feature vectors has a smaller dimension than a dimension of the first feature vector; for each of the second feature vectors, determining an intermediate set of similarity samples; generating a plurality of clusters based on the intermediate sets of similarity samples; and generating an output set of similarity samples based on the plurality of clusters..

The foregoing and other described implementations can each, optionally, include one or more of the following features:

A first feature, combinable with any of the following features, wherein the intermediate set of similarity samples is determined by using a k-nearest neighbors (k-NN) algorithm.

A second feature, combinable with any of the previous or following features, wherein the generating a plurality of clusters based on the intermediate sets of similarity samples comprises: performing a clustering operation based on an initial dimensionality space of the similarity samples in the intermediate set wherein the k-NN algorithm is an exact k-NN algorithm or an approximate k-NN algorithm.

A third feature, combinable with any of the previous or following features, wherein the clustering operation is based on k-means algorithm.

A fourth feature, combinable with any of the previous or following features, wherein generating the output set of similarity samples based on the plurality of clusters comprises: selecting a preset number of similarity samples from each of the plurality of clusters.

A fifth feature, combinable with any of the previous or following features, wherein the wherein the selecting the preset number of similarity samples from each of the plurality of clusters: for each of the plurality of cluster, selecting the preset number of similarity samples having the shortest distance with the sample.

A sixth feature, combinable with any of the previous features, wherein the sample is a software code.

In a second implementation, a computer-readable medium containing instructions which, when executed, cause an electronic device to perform operations comprising: obtaining a first feature vector of a sample; processing the first feature vector through a plurality of dimensionality reduction processes, wherein each of the plurality of dimensionality reduction processes generates a respective second feature vector, each of the second feature vectors has a smaller dimension than a dimension of the first feature vector; for each of the second feature vectors, determining an intermediate set of similarity samples; generating a plurality of clusters based on the intermediate sets of similarity samples; and generating an output set of similarity samples based on the plurality of clusters..

The foregoing and other described implementations can each, optionally, include one or more of the following features:

A first feature, combinable with any of the following features, wherein the intermediate set of similarity samples is determined by using a k-nearest neighbors (k-NN) algorithm.

A second feature, combinable with any of the previous or following features, wherein the generating a plurality of clusters based on the intermediate sets of similarity samples comprises: performing a clustering operation based on an initial dimensionality space of the similarity samples in the intermediate set wherein the k-NN algorithm is an exact k-NN algorithm or an approximate k-NN algorithm.

A third feature, combinable with any of the previous or following features, wherein the clustering operation is based on k-means algorithm.

A fourth feature, combinable with any of the previous or following features, wherein generating the output set of similarity samples based on the plurality of clusters comprises: selecting a preset number of similarity samples from each of the plurality of clusters.

A fifth feature, combinable with any of the previous or following features, wherein the wherein the selecting the preset number of similarity samples from each of the plurality of clusters: for each of the plurality of cluster, selecting the preset number of similarity samples having the shortest distance with the sample.

A sixth feature, combinable with any of the previous features, wherein the sample is a software code.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising:
obtaining a first feature vector of a sample; processing the first feature vector through a plurality of dimensionality reduction processes, wherein each of the plurality of dimensionality reduction processes generates a respective second feature vector, each of the second feature vectors has a smaller dimension than a dimension of the first feature vector; for each of the second feature vectors, determining an intermediate set of similarity samples; generating a plurality of clusters based on the intermediate sets of similarity samples; and generating an output set of similarity samples based on the plurality of clusters..

The foregoing and other described implementations can each, optionally, include one or more of the following features:

A first feature, combinable with any of the following features, wherein the intermediate set of similarity samples is determined by using a k-nearest neighbors (k-NN) algorithm.

A second feature, combinable with any of the previous or following features, wherein the generating a plurality of clusters based on the intermediate sets of similarity samples comprises: performing a clustering operation based on an initial dimensionality space of the similarity samples in the intermediate set wherein the k-NN algorithm is an exact k-NN algorithm or an approximate k-NN algorithm.

A third feature, combinable with any of the previous or following features, wherein the clustering operation is based on k-means algorithm.

A fourth feature, combinable with any of the previous or following features, wherein generating the output set of similarity samples based on the plurality of clusters comprises: selecting a preset number of similarity samples from each of the plurality of clusters.

A fifth feature, combinable with any of the previous or following features, wherein the wherein the selecting the preset number of similarity samples from each of the plurality of clusters: for each of the plurality of cluster, selecting the preset number of similarity samples having the shortest distance with the sample.

A sixth feature, combinable with any of the previous features, wherein the sample is a software code.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatus with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

The processes and logic flows described in this specification can be performed by one or more programmable computers, executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a ROM or a RAM or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a PDA, a mobile audio or video player, a game console, a Global Positioning System (GPS) receiver, or a portable storage device, e.g., a USB flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security, or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD, LED, or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., such as a data server, or that includes a middleware component, e.g., an application server, or that includes a front-end component, e.g., a client computer having a graphical user interface or a Web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless LAN (WLAN) using, for example, 802.11 a/b/g/n/ac/ax/be and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship with each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and parallel processing may be advantageous.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Accordingly, the above description of example implementations does not define or constrain this disclosure. Other changes, substitutions, and alterations are also possible without departing from the spirit and scope of this disclosure.

## Claims

1. A method, comprising:
obtaining a first feature vector of a sample;
processing the first feature vector through a plurality of dimensionality reduction processes, wherein each of the plurality of dimensionality reduction processes generates a respective second feature vector, each of the second feature vectors has a smaller dimension than a dimension of the first feature vector;
for each of the second feature vectors, determining an intermediate set of similarity samples;
generating a plurality of clusters based on the intermediate sets of similarity samples; and
generating an output set of similarity samples based on the plurality of clusters.

2. The method of claim 1, wherein the intermediate set of similarity samples is determined by using a k-nearest neighbors (k-NN) algorithm.

3. The method of any one of claims 1 to 2, wherein the generating a plurality of clusters based on the intermediate sets of similarity samples comprises:
performing a clustering operation based on an initial dimensionality space of the similarity samples in the intermediate set.

4. The method of claim 3, wherein the clustering operation is based on k-means algorithm.

5. The method of any one of claims 1 to 4, wherein generating the output set of similarity samples based on the plurality of clusters comprises: selecting a preset number of similarity samples from each of the plurality of clusters.

6. The method of claim 5, wherein the selecting the preset number of similarity samples from each of the plurality of clusters: for each of the plurality of clusters, selecting the preset number of similarity samples having the shortest distance with the sample.

7. The method of any one of claims 1 to 6, wherein the sample is a software code.

8. A computer-readable medium containing instructions which, when executed, cause an electronic device to perform operations comprising:
obtaining a first feature vector of a sample;
processing the first feature vector through a plurality of dimensionality reduction processes, wherein each of the plurality of dimensionality reduction processes generates a respective second feature vector, each of the second feature vectors has a smaller dimension than a dimension of the first feature vector;
for each of the second feature vectors, determining an intermediate set of similarity samples;
generating a plurality of clusters based on the intermediate sets of similarity samples; and
generating an output set of similarity samples based on the plurality of clusters.

9. The computer-readable medium of claim 8, wherein the intermediate set of similarity samples is determined by using a k-nearest neighbors (k-NN) algorithm.

10. The computer-readable medium of any one of claims 8 to 9, wherein the generating a plurality of clusters based on the intermediate sets of similarity samples comprises:
performing a clustering operation based on an initial dimensionality space of the similarity samples in the intermediate set.

11. The computer-readable medium of claim 10, wherein the clustering operation is based on k-means algorithm.

12. The computer-readable medium of any one of claims 8 to 11, wherein generating the output set of similarity samples based on the plurality of clusters comprises: selecting a preset number of similarity samples from each of the plurality of clusters.

13. The computer-readable medium of claim 12, wherein the selecting the preset number of similarity samples from each of the plurality of clusters: for each of the plurality of cluster, selecting the preset number of similarity samples having the shortest distance with the sample.

14. The computer-readable medium of any one of claims 8 to 13, wherein the sample is a software code.

15. A computer-implemented system, comprising:
one or more computers; and
one or more computer memory devices interoperably coupled with the one or more computers and having tangible, non-transitory, machine-readable media storing one or more instructions that, when executed by the one or more computers, perform the method steps of any of claims 1 to 7.
